# EUROPEAN PATENT SPECIFICATION

(11) **EP 3 239 097 B1**
(45) Date of publication and mention of the grant of the patent: **13.02.2019**
(21) Application number: 16167062.5
(22) Date of filing: 26.04.2016
(51) Int. Cl.: C01B 3/34, H01M 8/0612

(54) **FUEL CELL DEVICE**
BRENNSTOFFZELLENELEMENT
DISPOSITIF À PILE À COMBUSTIBLE

(43) Date of publication of application: 01.11.2017
(73) Proprietor: Aisin Seiki Kabushiki Kaisha, Kariya-shi, Aichi-ken, 448-8650 (JP); ROBERT BOSCH GMBH, 70469 Stuttgart (DE)
(72) Inventor: Kuwaba, Koichi, Aichi-ken, Aichi 448-8650 (JP); Endo, Satoshi, Aichi-ken, Aichi 448-8650 (JP); Friede, Wolfgang, 71384 Weinstadt (DE)
(74) Representative: Daub, Thomas

(56) References cited:
- EP-A1- 2 256 851
- EP-A2- 1 753 061
- JP-A- 2012 138 186
- US-A1- 2015 044 587

## Description

### Prior art

Fuel cell device, which is provided to be operated with a fluidic fuel, with a desulfurization unit, which is provided to desulfurize the fuel at least partially, with a reformer unit, which is provided for generating at least one fuel gas, and with a fuel cell unit, is already known.

US2015/0044587 discloses a fuel cell device with a desulfurisation unit, a reformer and a fuel cell. The device comprises a pure-water tank that provides water to the reformer. The water tank is connected to a water pump. During shutdown of the system, water is still fed to the reformer

### Disclosure of the invention

The invention is based on a fuel cell device, according to claim 1, which is provided to be operated with a fluidic fuel, with a desulfurization unit, which is provided to desulfurize the fuel at least partially, with a reformer unit, which is provided for generating at least one fuel gas, and with a fuel cell unit.
It is proposed that the fuel cell device comprises a water supply unit, which is provided for supplying water at least temporarily to the reformer unit at least when shutting down the fuel cell unit.
In this context, by a "fuel cell device" is to be understood in particular a functional component, in particular a structural and/or functioning component of a fuel cell system. In this context, a "fuel cell system" is to be understood as a system provided for stationary and/or mobile generation of in particular electrical and/or thermal energy by using at least one fuel cell unit. "Provided" is to be understood in particular as specifically programmed, designed and/or equipped. By an object being provided for a certain function, it is to be understood in particular that the object fulfills and carries out this certain function in at least one application state and/or operation state. In this context, by a "fuel cell unit" is to be understood a unit with at least one fuel cell, which is provided for converting at least a chemical reaction energy of at least one in particular continuously supplied fuel gas, in particular hydrogen and/or carbon monoxide, and at least one oxidizing agent, in particular oxygen from air, into electrical and/or thermal energy. The at least one fuel cell may be embodied in particular as a solid oxide fuel cell (SOFC). Preferably, the fuel cell unit comprises a plurality of fuel cells, which are in particular arranged in a fuel cell stack. In this context, a "desulfurization unit" is to be understood as a unit provided to reduce a volume and/or mole fraction of sulfur compounds in the fuel, in particular below a specified threshold value and preferably to remove a volume and/or mole fraction of sulfur compounds in the fuel at least substantially from the fuel, preferably by at least one physical and/or chemical adsorption and/or absorption process. In this context, by a "reformer unit" is to be understood in particular a chemical-technical unit, which is provided for processing the fuel, in particular for generating a fuel gas containing gas mixture, in particular by partial oxidation and/or by an autothermal reforming and/or preferably by steam reforming. Preferably, the reformer unit is embodied as a steam reformer unit. In this context, a "steam reformer unit" is to be understood in particular as a reformer unit provided to process the fuel by addition of water vapor for generation of the fuel gas containing gas mixture.

In this context, by a "water supply unit" is to be understood in particular a unit, which is provided for supplying water which is required for a reforming process to the reformer unit. During normal operation of the fuel cell unit the water supply unit is provided for supplying water continuously to the reformer unit. In particular, the water supply unit comprises at least one water supply pump provided for in particular continuous conveyance of the water. The water supply unit in particular comprises at least one vaporizer, which is fluidically arranged upstream of the reformer unit and which is provided for vaporizing the supplied water. When shutting down the fuel cell unit, e.g. in case of an emergency shutdown, the water supply unit is provided for keeping up the water supply of the reformer unit in particular for at least four hours, preferably for at least eight hours and especially preferred for at least twelve hours.

By such an implementation a fuel cell device, having advantageous operative features, in particular an enhanced shut down behavior, can be provided. In particular during a normal operation of the fuel cell unit materials of the desulfurization unit may absorb methane. In case of a shutdown of the fuel cell unit, e.g. in case of an emergency shutdown, the absorbed methane may be desorbed, which may lead to a coking of the reformer unit and/or the fuel cell unit if no water or an insufficient amount of water is supplied to the reformer unit. By implementing a water supply unit, which is provided for supplying water at least temporarily to the reformer unit when shutting down the fuel cell unit, a sufficient amount of water can be supplied to the reformer unit even in case of a shutdown. Hereby, coking of the reformer unit and/or the fuel cell unit can be advantageously reduced or preferably advantageously avoided.

It is further proposed that the water supply unit comprises at least one water reservoir, which is provided for providing water for supplying the reformer unit at least when shutting down the fuel cell unit. In particular, the water reservoir is provided for having a sufficient amount of water available for supplying the reformer unit when shutting down the fuel cell unit. The water reservoir is in particular provided to have at least 50 ml, preferably at least 100 ml and especially preferable at least 150 ml of water available for supplying the reformer unit when shutting down the fuel cell unit. In particular, the water reservoir comprises at least one water tank, which is provided for storing the water for supplying the reformer unit at least when shutting down the fuel cell unit. The water tank may be embodied at least partly as a rigid water tank. In particular, the water reservoir comprises at least one valve particularly a float valve, which is provided for releasing air from the water tank during filling the water tank and/or for letting in air into the water tank during emptying the water tank. Alternatively the water tank may be embodied as a membrane expansion water tank or a spring-loaded water tank. Hereby, a sufficient amount of water for supplying the reformer unit can be provided when shutting down the fuel cell unit.

Furthermore, it is proposed that the water supply unit comprises at least one water storage pump, which is at least provided for filling the water reservoir at least partially with water during a normal operation of the fuel cell unit. Preferably, the water storage pump is provided for filling the water reservoir completely during a normal operation of the fuel cell unit. The water supply pump is particularly provided for promoting water from a domestic water supply and/or from another water source to the water reservoir during a normal operation of the fuel cell unit. In particular, the water storage pump is embodied as an electrically driven water pump. The water storage pump is in particular driven by electrical energy provided by the fuel cell unit during a normal operation of the fuel cell unit. Hereby water for supplying the reformer unit can be advantageously stored during a normal operation of the fuel cell unit.

The water reservoir is arranged above the reformer unit with respect to a common reference level. Particularly, the common reference level may be a floor of an installation site of the fuel cell device. In particular, the water reservoir is connected via at least one at least substantially perpendicular orientated down pipe with at least one supply pipe of the reformer unit. In particular the down pipe is at least substantially perpendicular to the common reference level. Hereby, water for supplying the reformer unit can be advantageously conveyed by means of gravity from the water reservoir towards the reformer unit when shutting down the fuel cell unit.
It is further proposed that the water supply unit comprises at least one water supply pump, which is at least provided for continuously supplying water to the reformer unit during a normal operation of the fuel cell unit, and which comprises at least one energy storage, which is provided for supplying energy at least to the water supply pump when shutting down the fuel cell unit. In particular, the water supply pump is embodied as an electrically driven water pump. The water supply pump is in particular driven by electrical energy provided by the fuel cell unit during a normal operation of the fuel cell unit.

In particular, the energy storage is provided for storing particularly electrical and/or mechanical energy for driving the water supply pump when shutting down the fuel cell unit. The energy storage is preferably embodied as electrical energy storage, e.g. as a battery, a rechargeable battery, a capacitor and/or a supercapacitor. When shutting down the fuel cell unit the water supply pump is in particular driven by electrical energy provided by the energy storage. In particular, the water supply pump is provided for promoting water from a domestic water supply to the reformer unit during a normal operation of the fuel cell unit. Furthermore, the water supply pump is provided for conveying water at least temporarily from a domestic water supply and/or another water source to the reformer unit when shutting down the fuel cell unit. In particular, the energy storage is provided for supplying energy to the water supply pump for at least four hours, preferably for at least eight hours and especially preferable for at least twelve hours. Hereby a sufficient amount of water for supplying the reformer unit can be provided when shutting down the fuel cell unit.
In particular, the energy storage may be charged by an external power source, e.g. a domestic power supply. Preferably, the energy storage is provided for storing electrical energy provided by the fuel cell unit during a normal operation of the fuel cell unit. The energy storage is preferably embodied as a rechargeable battery, a capacitor and/or a super capacitor. Hereby, energy for supplying the water supply pump can be advantageously stored during a normal operation of the fuel cell unit.

It is moreover proposed that the water storage pump and the water supply pump are identical. In particular, the water storage pump and the water supply pump are integrally embodied as a single water pump, which is provided to carry out both functions. The single water pump in particular may be provided for simultaneously supplying water to the reformer unit and the water reservoir during a normal operation of the fuel cell unit. In addition or alternatively, the single water pump in particular may be provided for supplying water to the reformer unit during a normal operation of the fuel cell unit and supplying at least temporarily water to the reformer unit when shutting down the fuel cell unit. Hereby, a required number of water pumps can be advantageously reduced.

Furthermore, a fuel cell system is proposed with at least one fuel cell device according to the invention. Besides the fuel cell device the fuel cell system may comprise further components and/or units such as supply pipes for fuel and/or air, flue pipes, heat exchangers, compressors, catalytic converters, compressors, and/or afterburners. Hereby, a fuel cell system having an enhanced shut down behavior can be provided.

Furthermore, a method for operating a fuel cell device, which is provided to be operated with a fluidic fuel, with a desulfurization unit, which is provided to desulfurize the fuel at least partially, with a reformer unit, which is provided for generating at least one fuel gas, and with a fuel cell unit, wherein the reformer unit is at least temporarily supplied with water when shutting down the fuel cell unit, is proposed. Hereby, a sufficient amount of water can be supplied to the reformer unit even when shutting down the fuel cell unit. Hereby coking of the reformer unit and/or the fuel cell unit can be advantageously reduced or preferably advantageously avoided.

The fuel cell device according to the invention is herein not to be restricted to the application and implementation described above. In particular, for fulfilling a function herein described, the fuel cell device according to the invention may comprise a number of individual elements, components and units, which differ from the number herein mentioned.

### Drawings

Further advantages may be gathered from the following description of the drawing. In the drawing two exemplary embodiments of the invention are shown. The drawing, the description and the claims comprise a plurality of features in combination. The person skilled in the art will expediently also consider the features individually and will bring them together in further purposeful combinations.

The drawing shows:

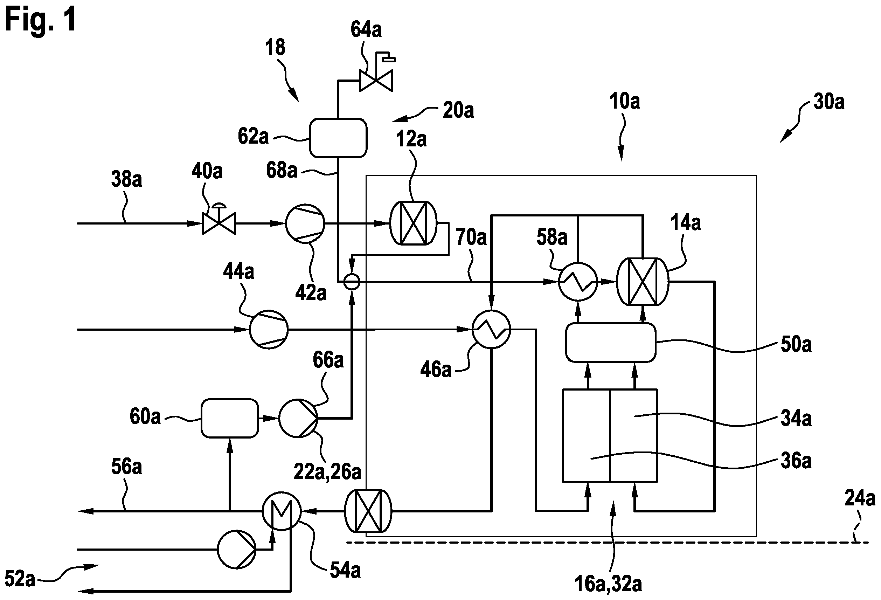

- In fig. 1: a schematic view of a fuel cell system with a fuel cell device comprising a desulfurization unit, a reformer unit, a fuel cell unit and a water supply unit with a water reservoir, which is provided for providing water for supplying the reformer unit when shutting down the fuel cell unit, and

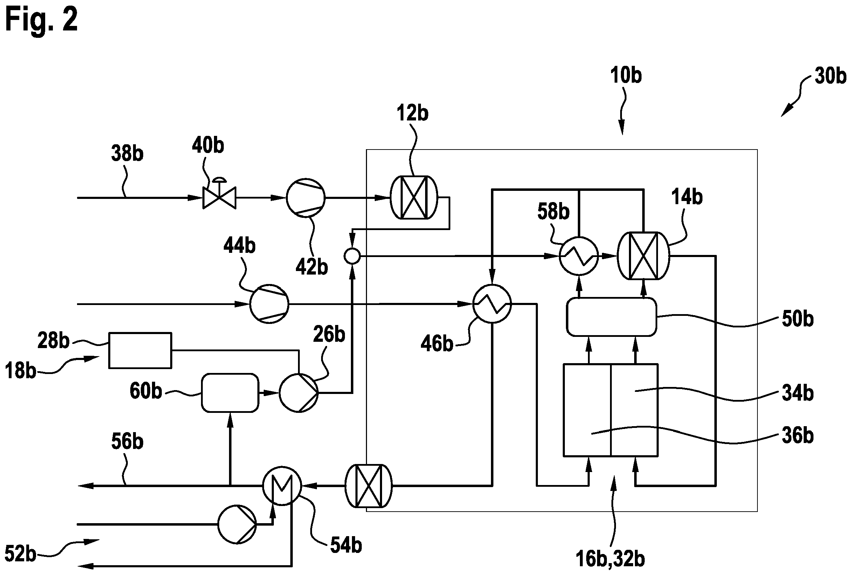

- In fig. 2: a schematic view of a fuel cell system with an alternatively embodied fuel cell device comprising a desulfurization unit, a reformer unit, a fuel cell unit and a water supply unit, a water supply unit with a water supply pump and a energy storage, which is provided for supplying energy to the water supply pump when shutting down the fuel cell unit.

### Description of the exemplary embodiments

Figure 1 shows a schematic view of a fuel cell system 30a. The fuel cell system 30a comprises a fuel cell device 10a, which is provided to be operated with a fluidic fuel, in particular with natural gas. Alternatively, it is also conceivable to operate the fuel cell device 10a with another hydrocarbon containing in particular gaseous fuel such as biogas. The fuel cell device 10a comprises a fuel cell unit 16a. The fuel cell unit 16a is shown here simplified as a single fuel cell 32a. However, a fuel cell unit embodied as a fuel cell stack comprising a plurality of fuel cells is expedient. The fuel cell 32a is preferably embodied as a solid oxide fuel cell. The fuel cell 32a has an anode 34a and a cathode 36a. From a fuel supply line 38a the fluidic fuel is fed to the fuel cell system 30a. Feed-in of the fluidic fuel can be controlled and/or regulated and/or entirely interrupted by a fuel valve 40a. The fuel valve 40a is preferably electro-magnetically actuatable. By means of a fuel compressor 42a a sufficient flow-rate of the fluidic fuel is ensured. Air is fed to a cathode 36a of the fuel cell unit 16a by means of a further compressor 44a or fan. Before entering the cathode 36a the air is preheated by a preheating unit 46a. Furthermore, the fuel cell device 10a comprises a desulfurization unit 12a.

The desulfurization unit 12a is connected downstream of the fuel compressor 42a. The desulfurization unit 12a is provided to desulfurize the fluidic fuel. The fuel cell unit 10a further comprises a reformer unit 14a. The reformer unit 14a is provided for obtaining a hydrogen-rich fuel gas by processing the desulfurized fluidic fuel. The reformer unit 14a is embodied as a steam reformer unit. The hydrogen-rich gas leaving the reformer unit 14a is mainly fed to the anode 34a of the fuel cell unit 16a.

The fuel cell device 10a further comprises a water supply unit 18a. The water supply unit 18a is provided for supplying water to the reformer unit 14a. Before entering the reformer unit 14a the water supplied is vaporized by a vaporizer unit 58a. The water supply unit 18a is provided for supplying water to the reformer unit 14a continuously during a normal operation of the fuel cell unit 16a. The water supply unit 18a comprises a water supply pump 26a provided for a continuous conveyance of the water from a water source 60a. The water source 60a can be a water tank that is filled either as shown by condensate water from the offgas line or by a connection to an external water supply. The water source may also contain a filter, for example a purifier, ion exchanger and/or a reverse osmosis unit. The water conveyed by the water supply pump 26a is mixed with the desulfurized fluidic fuel leaving the desulfurization unit 12a. During a normal operation of the fuel cell unit 16a materials of the desulfurization unit 12a may absorb methane. When shutting down the fuel cell unit 16a, e.g. in case of an emergency shutdown, the absorbed methane may be desorbed, which may lead to a coking of the reformer unit 14a and/or the fuel cell unit 16a. To avoid coking of the reformer unit 14a and/or the of fuel cell unit 16a by desorbed methane, the water supply unit 18a is provided for supplying water at least temporarily to the reformer unit 14a when shutting down the fuel cell unit 16a. Preferably, the water supply unit 18a is provided for supplying water for at least twelve hours to the reformer unit 14a when shutting down the fuel cell unit 16a.

Due to the fact that the water supply pump 26a is no longer supplied with energy when shutting down the fuel cell unit 16a accordingly no water is supplied to the reformer unit 14a by the water supply pump 26a. The water supply unit 18a comprises a water reservoir 20a, which is provided for providing water for supplying the reformer unit 14a when shutting down the fuel cell unit. In particular, the water reservoir 20a is provided for having a sufficient amount of water available for supplying the reformer unit 14a when shutting down the fuel cell unit 16a. The water reservoir 20 is in particular provided for having at least 50 ml, preferable at least 100 ml and especially preferably at least 150 ml of water available for supplying the reformer unit 14a when shutting down the fuel cell unit 16a. The water reservoir 20a comprises a water tank 62a, which is provided for storing the water for supplying the reformer unit 14a when shutting down the fuel cell unit 16a. The water tank 62a may be embodied at least partly as a rigid water tank. In particular, the water reservoir 20a comprises at least one valve 64a particularly a float valve, which is provided for releasing air from the water tank 62a during the filling of the water tank 62a and/or for drawing air into the water tank 62a while emptying the water tank. The water supply unit 14a comprises a water storage pump 22a, which is provided for filling the water reservoir 20a with water during a normal operation of the fuel cell unit 16a. The water storage pump 22a and the water supply pump 26a are integrally embodied as a single water pump 66a, which is provided to carry out both functions. The single water pump 66a is provided for simultaneously supplying water to the reformer unit 14a and to the water reservoir 20a during a normal operation of the fuel cell unit 16a.
The water reservoir 20a is arranged above the reformer unit 14a with respect to a common reference level 24a. Particularly, the common reference level 24a may be a floor of an installation site of the fuel cell device 10a. The water reservoir 20a is connected via an at least substantially perpendicular orientated down pipe 68a with a supply pipe 70a of the reformer unit 14a. In particular, the down pipe 68a is at least substantially perpendicular to the common reference level 24a. During a normal operation of the fuel cell unit 16a the water reservoir 20a is supplied with water via the down pipe 68a. When shutting down the fuel cell unit 16a water is conveyed via the down pipe 68a to the supply pipe 70a of the reformer unit 14a by means of gravity.
During normal operation of the fuel cell unit 16a an exhaust gas of the anode 34a and air from the cathode 36a of the fuel cell unit 16a are fed to a combustion unit 50a in which an afterburning of combustible components remaining in the anode exhaust gas is effected. Thermal energy herein released is transferred, for example to a heating water circulation 52a via a heat exchanger 54a, to the reformer unit 14a, to the preheating unit 46a and/or to the vaporizer unit 58a. An exhaust gas is discharged via a chimney 56a.

Figure 2 shows a further exemplary embodiment not forming part of the invention. The following descriptions and the drawings are essentially limited to the differences between the embodiments, wherein regarding equally designated components, in particular with regard to components with the same reference numerals, reference can be made to the drawings and/or the description of the embodiment of figure 1. To distinguish the exemplary embodiments the letter a is attached to the reference numerals of the embodiment of figure 1. In the exemplary embodiment of figure 2 the letter a is replaced by the letter b.

Figure 2 shows a schematic view of a fuel cell system 30b. The fuel cell system 30b comprises an alternatively embodied fuel cell device 10b, which is provided to be operated with a fluidic fuel, in particular with natural gas. Alternatively, it is also conceivable to operate the fuel cell device 10b with another hydrocarbon containing in particular gaseous fuel such as biogas. The fuel cell device 10b comprises a fuel cell unit 16b. The fuel cell unit 16b is shown here simplified as a single fuel cell 32b. However a fuel cell unit embodied as a fuel cell stack comprising a plurality of fuel cells is expedient. The fuel cell 32b is preferably embodied as a solid oxide fuel cell. The fuel cell 32b has an anode 34b and a cathode 36b. From a fuel supply line 38b the fluidic fuel is fed to the fuel cell system 30b. Feed-in of the fluidic fuel can be controlled and/or regulated and/or entirely interrupted by a fuel valve 40b. The fuel valve 40b is preferably electro-magnetically actuatable. By means of a fuel compressor 42b a sufficient flow-rate of the fluidic fuel is ensured. Air is fed to the cathode 36b of the fuel cell unit 16b by means of a further compressor 44b or fan. Before entering the cathode 36b the air is preheated by a preheating unit 46b. Furthermore, the fuel cell device 10b comprises a desulfurization unit 12b. The desulfurization unit 12b is connected downstream to the fuel compressor 42b. The desulfurization unit 12b is provided to desulfurize the fluidic fuel. The fuel cell unit 10b further comprises a reformer unit 14b. The reformer unit 14a is provided for obtaining a hydrogen-rich fuel gas by processing the desulfurized fluidic fuel. The reformer unit 14b is embodied as a steam reformer unit. The hydrogen-rich gas leaving the reformer unit 14b is mainly fed to the anode 34b of the fuel cell unit 16b.

The fuel cell device 10b further comprises a water supply unit 18b. The water supply unit 18b is provided for supplying water to the reformer unit 14b. Before entering the reformer unit 14b the water supplied is vaporized by a vaporizer unit 58b. The water supply unit 18b is provided for supplying water to the reformer unit 14b continuously during a normal operation of the fuel cell unit 16b. The water supply unit 18b comprises a water supply pump 26b provided for a continuous conveyance of the water from a water source 60b. The water source 60b can be a water tank that is filled either as shown by condensate water from the offgas line or by a connection to an external water supply. The water source may also contain a filter, for example a purifier, ion exchanger and/or a reverse osmosis unit. The water promoted by the water supply pump 26b is mixed with the desulfurized fluidic fuel leaving the desulfurization unit 12b. During a normal operation of the fuel cell unit 16b materials of the desulfurization unit 12b may absorb methane. When shutting down the fuel cell unit 16b, e.g. in case of an emergency shutdown, the absorbed methane may be desorbed, which may lead to a coking of the reformer unit 14b and/or the fuel cell unit 16b. To avoid coking of the reformer unit 14b and/or the fuel cell unit 16b by desorbed methane, the water supply unit 18b is provided for supplying water at least temporarily to the reformer unit 14b when shutting down the fuel cell unit 16b. Preferably, the water supply unit 18b is provided for supplying water for at least twelve hours to the reformer unit 14b when shutting down the fuel cell unit 16b. In particular, the water supply pump 26b is embodied as an electrically driven water pump. The water supply pump 26b is in particular driven by electrical energy provided by the fuel cell unit 16b during a normal operation of the fuel cell unit 16b.

The water supply unit 18b comprises an energy storage 28b, which is provided for supplying energy to the water supply pump 26b when shutting down the fuel cell unit 16b. In particular, the energy storage 28b is provided for storing electrical energy for driving the water supply pump 26b when shutting down the fuel cell unit 16a. The energy storage 28b is preferably embodied as electrical energy storage, e.g. as a battery, a rechargeable battery, a capacitor and/or a supercapacitor. When shutting down the fuel cell unit 16b the water supply pump 26b is driven by electrical energy provided by the energy storage 28b. Preferably, the energy storage 28b is provided for storing electrical energy provided by the fuel cell unit 16b during a normal operation of the fuel cell unit 16b. Preferably, the energy storage 28b is provided for supplying energy to the water supply pump 26b for at least twelve hours.

During normal operation of the fuel cell unit 16b an exhaust gas of the anode 34b and air from the cathode 36b of the fuel cell unit 16b are fed to a combustion unit 50b, in which an afterburning of combustible components remaining in the anode exhaust gas is effected. Thermal energy herein released is transferred, for example to a heating water circulation 52b via a heat exchanger 54b, to the reformer unit 14b, to the preheating unit 46b and/or to the vaporizer unit 58b. An exhaust gas is discharged via a chimney 56b.

## Claims

1. Fuel cell device, which is provided to be operated with a fluidic fuel, with a desulfurization unit (12a; 12b), which is provided to desulfurize the fuel at least partially, with a reformer unit (14a; 14b), which is provided for generating at least one fuel gas, and with a fuel cell unit (16a; 16b), and with a water supply unit (18a; 18b), which is provided for supplying water at least temporarily to the reformer unit (14a; 14b) at least in case of a shutdown of the fuel cell unit (16a; 16b), wherein the water supply unit (18a) comprises at least one water reservoir (20a), which is provided for providing water for supplying the reformer unit (14a) at least in case of a shutdown of the fuel cell unit (16a), **characterized in that** the water reservoir (20a) is arranged above the reformer unit (14a) with respect to a common reference level (24a).

2. Fuel cell device according to claim 1, **characterized in that** the reformer unit (14a; 14b) is embodied as a steam reformer unit.

3. Fuel cell device according to claim 1 or 2, **characterized in that** the water supply unit (18a) comprises at least one water storage pump (22a), which is at least provided for filling the water reservoir (20a) at least partially with water during a normal operation of the fuel cell unit (16a).

4. Fuel cell device according to one of the preceding claims, **characterized in that** the water supply unit (18b) comprises at least one water supply pump (26b), which is at least provided for continuously supplying water to the reformer unit (14b) during a normal operation of the fuel cell unit (16b), and which comprises at least one energy storage (28b), which is provided for supplying energy at least to the water supply pump (26b) in case of a shutdown of the fuel cell unit (16b).

5. Fuel cell device according to claim 4, **characterized in that** the energy storage (28b) is provided for storing electrical energy provided by the fuel cell unit (16b) during a normal operation of the fuel cell unit.

6. Fuel cell device at least according to claims 3 and 5, **characterized in that** the water storage pump (22a) and the water supply pump (26b) are identical.

7. Fuel cell system with at least one fuel cell device (10a; 10b) according to one of the preceding claims.

8. Method for operating a fuel cell device (10a; 10b), in particular according to one of the claims 1 to 8, which is provided to be operated with a fluidic fuel, with a desulfurization unit (12a; 12b), which is provided to desulfurize the fuel at least partially, with a reformer unit (14a; 14b), which is provided for generating at least one fuel gas, with a fuel cell unit (16a; 16b) and with a water supply unit (18a; 18b), which is provided for supplying water at least temporarily to the reformer unit (14a; 14b) at least in case of a shutdown of the fuel cell unit (16a; 16b), wherein the water supply unit (18a) comprises at least one water reservoir (20a), which is provided for providing water for supplying the reformer unit (14a) at least in case of a shutdown of the fuel cell unit (16a), **characterized in that** water for supplying the reformer unit (14a; 14b) is conveyed by means of gravity from the water reservoir (20a) towards the reformer unit (14a; 14b) in case of a shutdown of the fuel cell unit (16a; 16b).

## Patentansprüche

1. Brennstoffzellenvorrichtung, welche zum Betrieb mit einem fluidischen Brennstoff eingerichtet ist, mit einer Entschwefelungseinheit (12a; 12b), die zu einer zumindest teilweisen Entschwefelung des Brennstoffs eingerichtet ist, mit einer Reformereinheit (14a; 14b), die zur Erzeugung von zumindest einem Brenngas eingerichtet ist, und mit einer Brennstoffzelleneinheit (16a; 16b) und
mit einer Wasserversorgungseinheit (18a; 18b), die dazu eingerichtet ist, die Reformereinheit (14a; 14b), zumindest temporär, zumindest im Falle eines Abschaltens der Brennstoffzelleneinheit (16a; 16b), mit Wasser zu versorgen, wobei die Wasserversorgungseinheit (18a) mindestens einen Wassertank (20a) aufweist, welcher dazu eingerichtet ist, zumindest im Falle eines Abschaltens der Brennstoffzelleneinheit (16a), Wasser für die Versorgung der Reformereinheit (14a) bereitzustellen, **dadurch gekennzeichnet, dass** der Wassertank (20a) relativ zu einer gemeinsamen Referenzhöhe (24a) oberhalb der Reformereinheit (14a) angeordnet ist.

2. Brennstoffzellenvorrichtung nach Anspruch 1, **dadurch gekennzeichnet, dass** die Reformereinheit (14a; 14b) als Dampfreformereinheit ausgebildet ist.

3. Brennstoffzellenvorrichtung nach Anspruch 1 oder 2, **dadurch gekennzeichnet, dass** die Wasserversorgungseinheit (18a) mindestens eine Wasserspeicherpumpe (22a) aufweist, welche zumindest dazu eingerichtet ist, während eines Normalbetriebs der Brennstoffzelleneinheit (16a) den Wassertank (20a) zumindest teilweise mit Wasser zu füllen.

4. Brennstoffzellenvorrichtung nach einem der vorhergehenden Ansprüche, **dadurch gekennzeichnet, dass** die Wasserversorgungseinheit (18b) mindestens eine Wasserversorgungspumpe (26b) aufweist, welche zumindest dazu eingerichtet ist, während eines Normalbetriebs der Brennstoffzelleneinheit (16b) die Reformereinheit (14b) kontinuierlich mit Wasser zu versorgen, und welche mindestens einen Energiespeicher (28b) aufweist, welcher dazu eingerichtet ist, im Falle eines Abschaltens der Brennstoffzelleneinheit (16b) zumindest die Wasserversorgungspumpe (26b) mit Energie zu versorgen.

5. Brennstoffzellenvorrichtung nach Anspruch 4, **dadurch gekennzeichnet, dass** der Energiespeicher (28b) dazu eingerichtet ist, während eines Normalbetriebs der Brennstoffzelleneinheit (16b) von der Brennstoffzelleneinheit (16b) bereitgestellte elektrische Energie zu speichern.

6. Brennstoffzellenvorrichtung nach den Ansprüchen 3 und 5, **dadurch gekennzeichnet, dass** die Wasserspeicherpumpe (22a) und die Wasserversorgungspumpe (26b) identisch sind.

7. Brennstoffzellensystem mit zumindest einer Brennstoffzellenvorrichtung (10a; 10b) nach einem der vorhergehenden Ansprüche.

8. Verfahren zum Betrieb einer Brennstoffzellenvorrichtung (10a; 10b), insbesondere nach einem der Ansprüche 1 bis 6, welche zum Betrieb mit einem fluidischen Brennstoff eingerichtet ist,
mit einer Entschwefelungseinheit (12a; 12b), die zu einer zumindest teilweisen Entschwefelung des Brennstoffs eingerichtet ist,
mit einer Reformereinheit (14a; 14b), die zur Erzeugung von zumindest einem Brenngas eingerichtet ist, und
mit einer Brennstoffzelleneinheit (16a; 16b) und
mit einer Wasserversorgungseinheit (18a; 18b), die dazu eingerichtet ist, die Reformereinheit (14a; 14b), zumindest temporär, zumindest im Falle eines Abschaltens der Brennstoffzelleneinheit (16a; 16b), mit Wasser zu versorgen, wobei die Wasserversorgungseinheit (18a) zumindest einen Wassertank (20a) aufweist, welcher dazu eingerichtet ist, zumindest im Falle eines Abschaltens der Brennstoffzelleneinheit (16a) Wasser für die Versorgung der Reformereinheit (14a) bereitzustellen,
**dadurch gekennzeichnet, dass** im Falle eines Abschaltens der Brennstoffzelleneinheit (16a; 16b) Wasser zur Versorgung der Reformereinheit (14a; 14b) mittels der Schwerkraft von dem Wassertank (20a) zu der Reformereinheit (14a; 14b) geleitet wird.

## Revendications

1. Dispositif de pile à combustible prévu à être opéré avec un combustible fluidique, avec une unité à désulfurisation (12a ; 12b), qui est prévue pour une au moins partielle désulfurisation du combustible,
avec une unité à reformage (14a ; 14b), qui est prévue à générer au moins un gaz combustible,
et avec une unité pile à combustible (16a ; 16b),
et avec une unité de fourniture en eau(18a ; 18b), qui est prévue à fournir de l'eau au moins temporairement à l'unité à reformage (14a ; 14b) au moins en cas d'une fermeture de l'unité pile à combustible (16a ; 16b), l'unité de fourniture en eau (18a) comprenant au moins un réservoir d'eau (20a) prévu à fournir de l'eau pour une alimentation de l'unité à reformage (14a) au moins en cas d'une fermeture de l'unité pile à combustible (16a),
**caractérisé en ce que** le réservoir d'eau (20a) est disposé au-dessus de l'unité à reformage (14a ; 14b) relativement à un niveau de référence commun (24a).

2. Dispositif de pile à combustible selon la revendication 1, **caractérisé en ce que** l'unité à reformage (14a) est implémentée comme unité à reformage en vapeur.

3. Dispositif de pile à combustible selon l'une quelconque des revendications 1 ou 2, **caractérisé en ce que** l'unité de fourniture en eau (18a) comporte au moins une pompe de stockage d'eau (22a) prévue au moins pour remplir le réservoir d'eau (20a) au moins partiellement de l'eau pendant une opération normale de l'unité pile à combustible (16a).

4. Dispositif de pile à combustible selon l'une quelconque des revendications précédentes, **caractérisé en ce que** l'unité de fourniture en eau (18b) comporte au moins une pompe de fourniture en eau (26b), laquelle est prévue au moins pour continûment fournir de l'eau à l'unité à reformage (14a) pendant une opération de l'unité pile à combustible (16b) et comporte au moins un accumulateur d'énergie (28b) prévu pour fournir de l'énergie au moins à la pompe de fourniture en eau (26b) en cas d'une fermeture de l'unité pile à combustible (16b).

5. Dispositif de pile à combustible selon la revendication 4, **caractérisé en ce que** l'accumulateur d'énergie (28b) est prévu à stocker de l'énergie électrique fournie par l'unité pile à combustible (16b) pendant une opération normale de l'unité pile à combustible (16b).

6. Dispositif de pile à combustible au moins selon les revendications 3 et 5, **caractérisé en ce que** la pompe de stockage d'eau (22a) et la pompe de fourniture en eau (26b) sont identique.

7. Système pile à combustible avec au moins un dispositif de pile à combustible (10a ; 10b) selon l'une quelconque des revendications précédentes.

8. Procédé pour fonctionnement d'un dispositif de pile à combustible (10a ; 10b), notamment selon l'une quelconque des revendications 1 à 6, qui est prévu à être opéré avec un combustible fluidique,
avec une unité à désulfurisation (12a ; 12b), qui est prévue pour une au moins partielle désulfurisation du combustible,
avec une unité à reformage (14a ; 14b), qui est prévue à générer au moins un gaz combustible,
avec une unité pile à combustible (16a ; 16b)
et avec une unité de fourniture en eau (18a ; 18b), qui est prévue à fournir de l'eau au moins temporairement à l'unité à reformage (14a ; 14b) au moins en cas d'un arrêt de l'unité pile à combustible (16a ; 16b), l'unité de fourniture en eau (18a) comprenant au moins un réservoir d'eau (20a) prévu à fournir de l'eau pour une alimentation de l'unité à reformage (14a) au moins en cas d'une fermeture de l'unité pile à combustible (16a),
**caractérisé en ce que** de l'eau pour l'alimentation de l'unité à reformage (14a ; 14b) est conduite par le biais de la gravité du réservoir d'eau (20a) vers l'unité à reformage (14a ; 14b) en cas d'une fermeture de l'unité pile à combustible (16a ; 16b).
